# EUROPEAN PATENT APPLICATION

(11) **EP 2 113 181 A1**
(43) Date of publication of application: **04.11.2009**
(21) Application number: 09156462.5
(22) Date of filing: 27.03.2009
(51) Int. Cl.: A47J 36/02, A47J 36/04

(54) **Heating recipient**

(30) Priority: 27.03.2008 GB 0805511
(71) Applicant: Demetra BVBA, 2000 Antwerpen (BE)
(72) Inventor: Vos, Jo, 2000 Antwerpen (BE)
(74) Representative: Bird, William Edward

(57) **Abstract**

The present invention provides a heating recipient (1) comprising a body (2) having an edge (3) defining an opening (4) in a wall of the body (2), the body (2) being formed of a polymer material, and a sheet (5) of electrically conductive material having a coating (6) on an upper surface. The coated sheet (5, 6) is attached to the edge (3) of the body (2) by means of a fixing zone (7), e.g. a weld, between the coating (6) and the polymer material of the body (2), thereby closing the opening (4). The present invention also provides a method for manufacturing such a heating recipient (2).

## Description

### Technical field of the invention

The present invention relates to a heating recipient and to a method for producing such a heating recipient. More particularly, the present invention relates to recipients for inductive heating, e.g. consumable heating recipients, and methods for making such recipients.

### Background of the invention

Home delivery of meals or provision of hot meals in aeroplanes are two examples of numerous applications where heating of food or content is important. One known solution for such applications is to first heat the content and thereafter transport them in heat insulating containers, in order to keep the content sufficiently warm. The latter nevertheless does not provide a satisfactory result. Another solution is to make use of heating recipients wherein the food may be at least partially reheated during transport or at the place of delivery. The latter may for example be used where, for example, warm food is to be served and where there is no opportunity or time to freshly prepare the food. For these purposes, the recipients are filled with food in advance and, just before consumption, heated or re-heated and served to consumers of the food.

Known heating recipients may be formed of aluminium, CPET (crystalline poly(ethylene terephthalate)), PP (polypropylene) or the like. For heating the food, the heating recipients are placed on heating shelves or in a hot-air or microwave oven for some time and are then served. A disadvantage of such heating recipients is that heating of the food is not very precise, is time-consuming and the gastronomic quality of the heated food may be low.

One solution for this problem is the use of induction heating for heating food in a heating recipient. Induction heating of food may be faster and more economical than the way of heating described above.

An example of a heating recipient for use with induction heating is described in WO 2006/108635. This document describes a container comprising a base body which is formed of plastics into which electrically conductive particles are embedded for obtaining electrical conductivity of the material for induction-heating of food received in the container. Because these particles are situated inside the material of the container, quite high temperatures will be reached at some locations. Therefore, a high temperature resistant plastic may be required for the production of the container. Due to the thermal requirement on the material of the container, costs for the production of such containers may be high. Moreover, due to the nature of production of such material compositions of plastics comprising electrically conductive particles, the container will have relatively high mass.

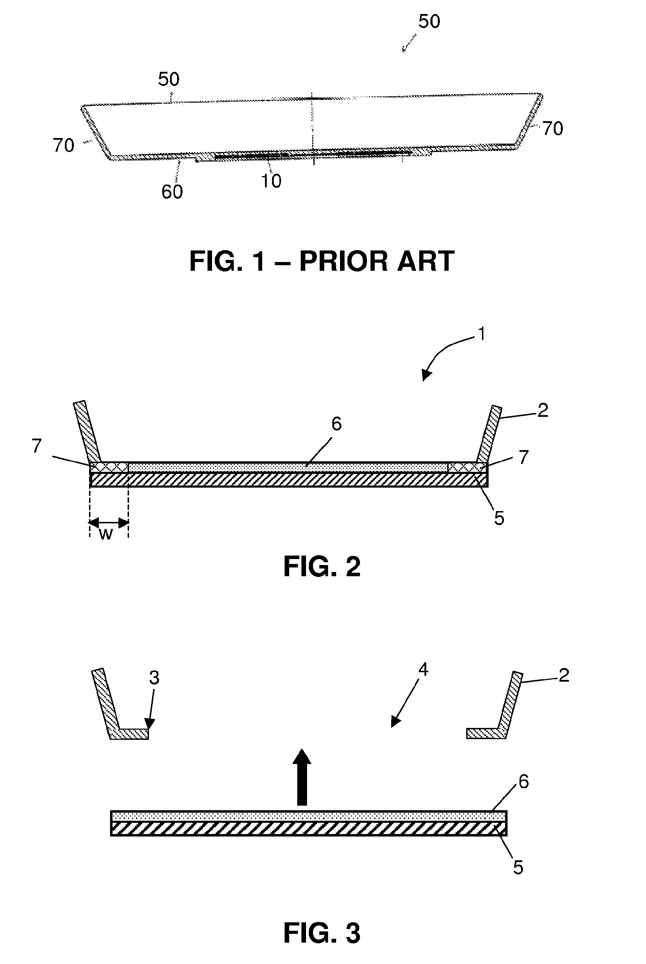

US 2007/0181563 describes a heating recipient 50 comprising a magnetically insusceptible polymeric material 70 and a magnetically susceptible component 10 which is associated with the magnetically insusceptible polymeric material 70 (see Fig. 1). The magnetically susceptible component 10 may be affixed to any portion of a side, bottom or top surface of the utensil 50, may be partially or entirely embedded in any region of a side bottom or top surface of the utensil 50 or may be encapsulated throughout any portion or region of any one or more surfaces of the utensil 50 or throughout the majority of any one or more surfaces of the utensil. In the embodiments illustrated in Fig. 1 the magnetically susceptible component 10 is embedded in the bottom 60 of the utensil 50.

A disadvantage of the heating recipient described in US 2007/0181563 is that it cannot be produced at low cost.

### Summary of the invention

It is an object of embodiments of the present invention to provide a good heating recipient and a method for manufacturing such a heating recipient.

A heating recipient according to embodiments of the invention may be easy to manufacture, which reduces time and costs of the manufacturing process.

A heating recipient according to embodiments of the invention provides a fast and homogeneous heating of the content of the heating recipient.

It is an advantage of embodiments according to the present invention that thin heating recipients can be provided, allowing to reduce the amount of storage space needed before use.

Because only a small overlap or weld of, e.g. between 1 mm and 15 mm exists between the metal plate and the polymeric material of the body, substantially no deformation of a heating recipient according to embodiments of the invention will occur during production. The latter may result in a more stable recipient, thus increasing the comfort for use.

The above objective is accomplished by a method and device according to the present invention.

In a first aspect, the present invention provides a heating recipient comprising a body having an edge defining an opening in a wall of the body, the body being formed of a polymer material, and a sheet of electrically conductive material having a first coating on an upper surface, wherein the coated sheet of electrically conductive material is attached to the edge of the body by means of a fixing zone between the first coating and the polymer material of the body, thereby closing the opening. Preferably, the edge is formed from a section of the body extending inwards from all around the lower part of the body towards the centre of the body, thereby forming an attachment section for attaching to the coated sheet.

It is an advantage of a heating recipient according to embodiments of the invention that it is easy to manufacture, which reduces time and costs of the manufacturing process. A heating recipient according to embodiments of the invention provides a fast and homogeneous heating of the content of the heating recipient.

According to embodiments of the invention, the fixing zone may be a weld.

The fixing zone may have a width of between 1 mm and 15 mm.

By keeping the weld as small as possible the volume of polymer material that is influenced by the attachment, e.g. melting due to welding, of the body to the coating of the sheet of electrically conductive material is kept small and consequently, the internal thermal stress that is generated in the final product, i.e. in the heating recipient is also kept minimal, which at least decreases the chance to deformation of the heating recipient upon heating.

The heating recipient may furthermore comprise a second coating at a surface opposite to the surface of the sheet where the first coating is present.

An advantage hereof is that heat generated by induction in the sheet of electrically conductive material may be prevented from going in another direction than the direction towards the content of the heating recipient.

The first coating on the sheet of electrically conductive material may comprise a same material as the body.

An advantage hereof is that in that way a good lamination of the body to the coated sheet of electrically conductive material may be obtained.

The sheet of electrically conductive material may comprise ferromagnetic material. For example, the sheet may comprise steel e.g. low carbon steel alloyed with manganese.

The use of steel has the advantage of still having sufficient stiffness to withstand thermal stress at thicknesses suitable for inductive heating. In that way deformation of the sheet of electrically conductive material and consequently of the complete heating recipient can be avoided upon heating.

According to embodiments of the invention, the sheet of electrically conductive material may substantially completely cover the wall of the body.

According to other embodiments of the invention, the sheet may partly cover the wall of the body. In this case, heating may be local, i.e. above the sheet.

In that way a homogeneous heating of the content of the recipient, e.g. food or liquid, may be obtained.

The polymer material of the body may comprise polypropylene or polyethylene terephthalate.

In a further aspect, the invention provides the use of the heating recipient according to embodiments of the invention for heating food.

In a still further aspect, the invention provides the use of the heating recipient according to embodiments of the invention for heating a liquid. In still another aspect, the present invention provides a method for manufacturing a heating recipient. The method comprises obtaining a sheet of electrically conductive material comprising a first coating on a first surface, obtaining a body formed of a polymer material, the body comprising an edge defining an opening in a wall of the body, and attaching the coated sheet to the edge of the body by forming a fixing zone between the first coating of the sheet and the polymer material of the body thereby closing the opening. Preferably the edge is formed from a section of the body extending inwards from all around the lower part of the body towards the centre of the body, thereby forming an attachment section for attaching to the coated sheet.

Attaching the coated sheet to the edge of the body may be performed such that the fixing zone has a width of between 1 mm and 15 mm.

By keeping the weld as small as possible the volume of polymer material that is influenced by the attachment, e.g. melting due to welding, of the body to the coating of the sheet of electrically conductive material is kept small and consequently, the internal thermal stress that is generated in the final product, i.e. in the heating recipient is also kept minimal, which at least decreases the chance to deformation of the heating recipient upon heating.

According to embodiments of the invention, forming a fixing zone may comprise creating a weld.

Attaching the coated sheet to the edge of the body may be performed by welding.

Forming a fixing zone may be performed by induction heating of the sheet of electrically conductive material.

Obtaining a sheet of electrically conductive material comprising a first coating on an upper surface may be performed by lamination.

Obtaining a body may comprise providing a body and cutting or punching an opening in a wall of the body along an edge.

In yet a further aspect, the present invention provides a heating recipient made by a method according to embodiments of the invention.

Particular and preferred aspects of the invention are set out in the accompanying independent and dependent claims. Features from the dependent claims may be combined with features of the independent claims and with features of other dependent claims as appropriate and not merely as explicitly set out in the claims.

Although there has been constant improvement, change and evolution of devices in this field, the present concepts are believed to represent substantial new and novel improvements, including departures from prior practices, resulting in the provision of more efficient, stable and reliable heating recipients of this nature.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Fig. 1 shows a prior art cooking utensil for cooking or heating food using induction heating.
Fig. 2 shows a heating recipient according to embodiments of the present invention.
Fig. 3 illustrates separate parts of the heating recipient of Fig. 2.
Fig. 4 illustrates a body comprising an opening of a heating recipient according to embodiments of the present invention.
Fig. 5 to Fig. 7 show examples of a heating recipient according to embodiments of the present invention.
Fig. 8 to Fig. 11 show subsequent steps in a method according to embodiments of the present invention.
Fig. 12 schematically illustrates the step of connecting the metal plate to the body of the heating recipient according to embodiments of the present invention.

In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims.

The present invention provides a heating recipient and a method for forming such a heating recipient. Heating recipients according to embodiments of the invention can be used for heating a content of the recipient, e.g. food or liquids, by using induction heating.

In a first aspect of the invention, a heating recipient is provided. A heating recipient according to embodiments of the invention may be a plate, a cup, a vessel or any other heating recipient suitable for heating, for example, food or liquids or both. The heating recipient comprises a body having an edge defining an opening in a wall of the body, the body being formed of a polymer material, and a sheet comprising or consisting of electrically conductive material having a coating on an upper surface. The electrically conductive material may be any type of material that is susceptible for induction heating. The electrically conductive material advantageously may be ferromagnetic material or magnetic material, as such materials are more susceptible for induction heating, although the invention is not limited thereto. The coated sheet comprising or consisting of electrically conductive material is attached to the edge of the body by means of a fixing zone, e.g. a weld, between the coating and the polymer material of the body, thereby closing the opening. It is an advantage of embodiments according to the present invention that there may only be a small overlap of between 1 mm and 15 mm between the metal plate and the polymeric material of the body. In this way, deformation of the heating recipient, e.g. resulting from heating, joining and cooling according to embodiments of the invention can be reduced or even avoided. To provide a suitable surface for attaching the sheet comprising or consisting of electrically conductive material to the body, the wall of the body extends a certain distance from its bottom edge in towards the centre of the bottom of the body. In other words the lower edge of the wall that forms the sides of the body, has a form such that there is a section of body material extending inwards from all around the lower or bottom part of the body towards the centre of the body thus forming an attachment section formed of the body material for attaching to the sheet comprising or consisting of electrically conductive material. The amount of wall material that extends inwards towards the centre should be sufficient to guarantee the overlap of 1 to 15 mm specified above. For example, a size of a section of the wall material that lies in the plane of the bottom of the body and extends from the wall towards the centre can be 5 to 40 mm.

It is an advantage of embodiments according to the present invention that the heating recipient can be thin. The latter can result in fast heating of the content of the heating recipient. Furthermore it has the advantage of requiring little storage space. Furthermore, as a substantially full sheet of electrically conductive material can be provided below a large portion of the heating recipient, homogeneous heating of the content may be obtained. It is an advantage of embodiments according to the present invention that such heating recipients may be easy in manufacturing, which reduces time and costs of the manufacturing process.

Further advantages of the manufacturing process according to the present invention is that because of the opening in the top of the body it is possible to introduce joining, e.g. welding equipment such as heat sealing equipment from both above and below the coated sheet when in position. This allows rapid heating but also allows placement of heat sinks to allow rapid cooling as well as clamps that can be applied from above and below to prevent deformation of the materials. A particular problem of heat sealing the conductive sheet to the bottom of the polymeric body is the formation of wrinkles in the material of the body where it overlaps with the sheet of conductive material. This can not only be unsightly but can result in lateral leaks. The outer edges of the conductive sheet at the location of the overlap zone expand during the heating. The centre of the conductive sheet remains cold, does not expand and prevents the outer edge of the conductive sheet to expand in a stressless manner. The outer edge of the conductive sheet will wrinkle to allow expansion of its material. The present invention provides a solution to this problem by providing a section of body material extending inwards from all around a lower part or the bottom of the body towards the centre of the body thus forming an attachment section. The attachment senction is formed of the body material for attaching to the sheet comprising or consisting of electrically conductive material while allowing access from both sides of equipment that can be used to control the formation of the wrinkles. The amount of wall material that extends inwards towards the centre should be sufficient to guarantee the overlap of 1 to 15 mm specified above. For example, a size of a section of the wall material that lies in the plane of the bottom of the body and extends from the wall towards the centre can be 5 to 40 mm.

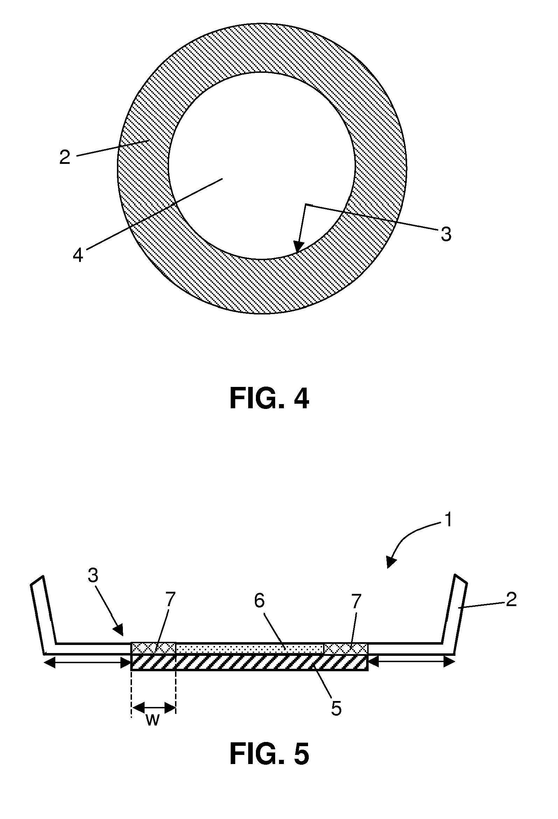

Fig. 2 illustrates an example of a heating recipient 1 according to an embodiment of the present invention. The heating recipient 1 comprises a body 2, also referred to as container, formed of a polymer material, e.g. thermoplastic polymer material. The polymer material may be any suitable polymer material, e.g. thermoplastic polymer material known by a person skilled in the art and may, for example, be polypropylene (PP) or polyethylene terephthalate (PET). The body 2 comprises an edge 3 defining an opening 4 in a wall of the body 2 (see Fig. 3 (cross-section) and Fig. 4 (top view)). In the example given, an opening 4 is defined in a bottom wall of the body 2. In the example given, the body has a circular bottom wall and the opening 4 formed in the bottom wall also has a circular shape. However, according to other embodiments of the invention, the opening 4 may have any other suitable shape such as, for example, oval, square or rectangular. According to embodiments of the invention, the shape of the bottom wall and the shape of the opening formed in the wall may be the same. For example, as illustrated in Fig. 3, the bottom wall of the body 2 as well as the opening 4 in the wall may have a circular shape. According to other embodiments of the invention, the shape of the bottom wall and the shape of the opening formed in the wall may be different from each other. For example, the bottom wall of the body 2 may have a circular shape while the opening 4 in the wall has a square or rectangular shape or vice versa. The edge 3 of the body is formed as a section of body material extending inwards from all around a lower part or the bottom of the body towards the centre of the body thus forming an attachment section formed of the body material for attaching to the sheet comprising or consisting of electrically conductive material. The amount of wall material that extends inwards towards the centre should be sufficient to guarantee the overlap of 1 to 15 mm with the conductive sheet. For example, a size of a section of the wall material that lies in the plane of the bottom of the body and extends from the wall towards the centre can be 5 to 40 mm.

The heating recipient 1 furthermore comprises the sheet comprising or consisting of electrically conductive material 5. The material of the sheet 5 may be suitable for being used with induction heating. The sheet material may be a metal. It may be a magnetic material. It may be a ferromagnetic material. Some examples, the present invention not being limited thereto may be steel, e.g. tin-plated steel or electrolytic chromium coated steel. In one example it may be low carbon steel alloyed with manganese. The steel may, according to embodiments of the invention be magnetic, but may, according to other embodiments of the invention also be non-magnetic. For some metals, such as for example Al or Cu, very thin layers would be required for developing inductive power due to their higher electrical conductivity (see further). However, these materials also have lower stiffness, which makes them less suitable for being used with the present invention. A way to still use such metals may be by co-laminating such thin metal layers with another, non-conducting and more stiff material. Examples of materials suitable to be used for this purpose may be but are not limited to polymers such as PP, PET, PEI (poly-ether imide), PES (poly ether sulphone)), LCP (liquid crystal polymer) or metals such as steel. Therefore, according to further embodiments of the invention, the sheet 5 may also be formed of a composite foil of a thin layer of a metal such as e.g. Al co-laminated with a non-conducting material as described above.

The sheet 5 advantageously may have a thickness sufficient to obtain a good induction heating (see further) of the content, e.g. food and/or liquids, of the heating recipient 1 and to still have sufficient stiffness to withstand thermal stress so as to avoid deformation of the sheet 5, and consequently of the complete heating recipient 1, upon heating as well during manufacturing (see further) as during use of the heating recipient 1. Therefore, the sheet 5 may have a thickness of between 0.05 mm and 0.5 mm and may, for example, be 0.21 mm. Suitable materials for being used as a sheet 5 according to embodiments of the invention may thus be metals which still have sufficient stiffness to withstand deformation upon heating, i.e. upon introduction of thermal stress, at small thicknesses of between 0.05 mm and 0.5 mm.

At least one surface, i.e. a surface of the sheet 5 which is attached to the body 2, is covered with a first coating 6 (see Fig. 3) to improve adhesion with the body 2, be it direct or indirect. The coating 6 may advantageously comprise or consist of a polymer material, e.g. thermoplastic suitable for being attached, e.g. for being welded to the polymer material of the body 2, and may for example be PP or PET. According to embodiments of the invention, the polymer material of the coating 6 may be the same as the polymer material of the body 2. According to other embodiments of the invention, the polymer material of the coating 6 may be different from the polymer material of the body 2. The coating 6 may have a thickness of between 0.01 mm and 0.1 mm, and may for example be 0.04 mm.

The coated sheet 5, 6 is attached, e.g. welded, to the polymer material of the edge 3 of the body 2, thereby forming a fixing zone, e.g. weld 7. The fixing zone can be the same size or smaller than the section of body material extending inwards from all around the lower part or the bottom of the body towards the centre of the body. Thus, the part of the body at the bottom surface used for forming an attachment section for attaching to the sheet comprising or consisting of electrically conductive material can be the same size or larger than is required for the overlap of 1 to 15 mm with the conductive sheet and/or the fixing zone 7. For example, a size of a section of the wall material that lies in the plane of the bottom of the body and extends from the wall towards the centre can be 5 to 40 mm, whereas the fixing zone need only be between 1 and 15mm.

In that way, the opening 4 in the wall, in the example given the bottom wall, of the body 2 is closed. The fixing zone 7 may have a width w of between 1 mm and 15 mm. The fixing zone 7 may result in a small overlap between the sheet 5 and the body 2. By keeping the fixing zone small, i.e. between 1 mm and 15 mm, the volume of polymer material that is influenced by the attachment, e.g. melting due to welding, of the body 2 to the coating 6 of the sheet 5, is kept small. The internal thermal stress that may be generated in the final product, i.e. in the heating recipient 1 is thus kept minimal. Furthermore, by keeping the fixing zone 7 small and optionally also the overlap between the sheet 5 and the body 2 small, thermal stresses during use may also be kept minimal. The overlap between the sheet 5 and the body 2 may be between 1 mm and 15 mm. Thus, the risk of deformation of the heating recipient upon heating during use of the heating recipient may be reduced, kept minimal or may even be avoided.

As can be seen from Fig. 2, substantially the complete bottom of the heating recipient 1 may be covered with the sheet 5. An advantage hereof is that a homogeneous heating of the content of the heating recipient 1, e.g. food or a liquid may be obtained. According to other embodiments however, and as illustrated in Fig. 5, the bottom wall of the heating recipient may only partly be covered. In this case, heating may be more local, i.e. above the sheet 5. In this embodiment there is a section of body material extending inwards from all around the lower part or the bottom of the body towards the centre of the body. Thus the part of the body at the bottom surface used for forming an attachment section for attaching to the sheet comprising or consisting of electrically conductive material is in this embodiment larger than is required for the overlap of 1 to 15 mm with the conductive sheet and/or the fixing zone 7. For example, a size of a section of the wall material that lies in the plane of the bottom of the body and extends from the wall towards the centre can be 20 to 60 mm, in this embodiment whereas the fixing zone need only be between 1 and 15mm.

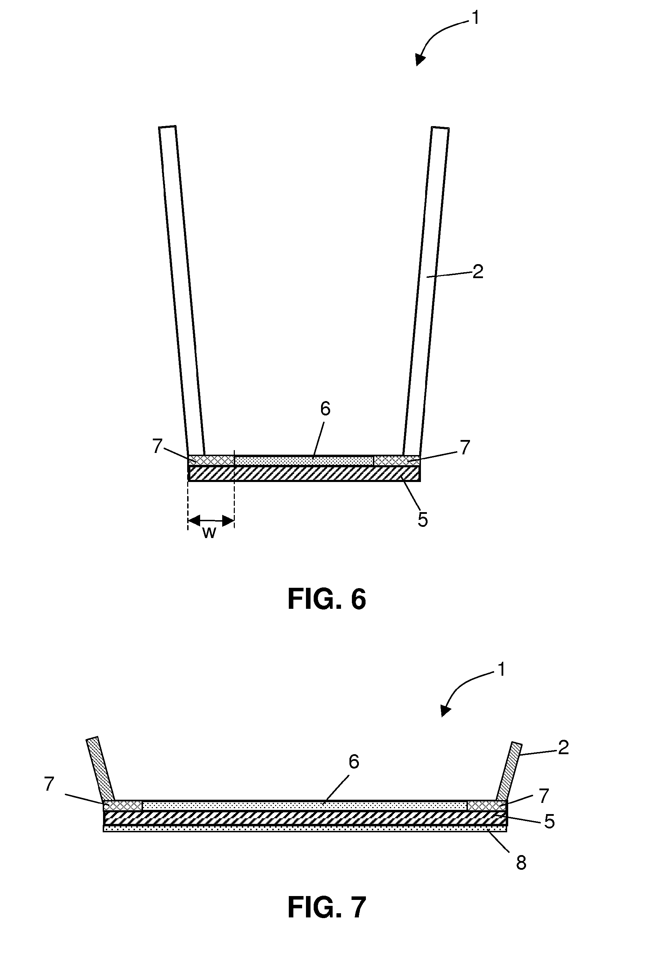

The examples of heating recipients 1 given in Fig. 2 and Fig. 5 may be plates and can, for example, be usable for heating food. However, according to embodiments of the invention, the heating recipients 1 may be cups or vessels and may be used for, for example, heating liquids, such as e.g. water, soup or sauce, or for heating a combination of food and liquids. In some cases, the side walls of the heating recipient 1 may be higher as is illustrated in Fig. 6. It has to be noted that although the heating recipient 1 illustrated in Fig. 6 comprises a sheet 5 that covers the bottom wall of the body 2 substantially completely, such a heating recipient 1 may also comprise a sheet 5 that only partly covers the bottom wall of the body 2 as was the case for the heating recipient 1 illustrated in Fig. 5. In the latter case, an outer part of the bottom wall may not be covered by the sheet 5. This outer part, or in other words the uncovered part of the bottom wall, may have a width wₒ of between 0 mm and 15 mm, e.g. between 8 mm and 15 mm, and may for example be 10 mm. The width wₒ may be such that a compromise is obtained between sufficient heating and economical use of the sheet material.

A heating recipient 1 according to embodiments of the invention can be heated by induction heating. Therefore, heating equipment such as e.g. an electromagnetic field generating means, like an induction coil which is fed with an alternating current may be used. The alternating current then generates a magnetic field. The heating recipient 1 is placed in the magnetic field and due to the use of a suitable material for the sheet 1, this sheet 1 is heated by electromagnetic induction. Through this, eddy currents are generated within the metal which leads to resistive heating of the metal. The heat is then transferred to the content of the heating container, e.g. food or liquid.

According to some embodiments of the invention, the sheet 5 may also comprise a coating 8 at another surface, as illustrated in Fig. 7. In that way, heat generated by induction in the sheet 5 may be prevented from going in another direction than the direction towards the content of the heating recipient 1. In other words, the coating 8 at the other surface of the sheet 5 of electrically conductive material may prevent generated heat from being lost at a side of the heating recipient not in contact with the food. The coating 8 may comprise any suitable material, such as e.g. a polymer material. According to embodiments of the invention, the coating 8 at the other surface of the electrically conductive material sheet 5 may comprise the same material as the coating 6 on the upper surface. According to other embodiments of the invention, the coating 8 at the lower surface of the sheet 5 of electrically conductive material may comprise a different material as the coating 6 on the upper surface. The material of the coating 8 at the lower surface of the sheet 5 of electrically conductive material may for example be PP or PET or may be an expanded or foamed material.

According to some embodiments of the present invention, a coating applied at the side adapted for facing the content may be such that it protects the content from contacting the sheet of electrically conductive material. The coating may be made of a food graded material.

For the embodiments shown in Figs. 6 and 7, as in other embodiments, there is a section of body material extending inwards from all around the lower part or bottom of the body towards the centre of the body. Thus the part of the body at the bottom surface used for forming an attachment section for attaching to the sheet comprising or consisting of electrically conductive material can be the same size or larger than is required for the overlap of 1 to 15 mm with the conductive sheet and/or for forming the fixing zone 7. For example, a size of a section of the wall material that lies in the plane of the bottom of the body and extends from the wall towards the centre can be 5 to 40 mm , whereas the fixing zone need only be between 1 and 15mm.

In further aspect of the invention, a method is provided for the manufacturing of a heating recipient 1 suitable for induction heating of the content. The method comprises obtaining a body formed of a polymer material wherein the body comprises an edge defining an opening in a wall of the body. The edge is formed from a section of body material extending inwards from all around the lower part or the bottom of the body towards the centre of the body. Thus the part of the body at the bottom surface used for forming an attachment section for attaching to the sheet comprising or consisting of electrically conductive material can be the same size or larger than is required for the overlap of 1 to 15 mm with the conductive sheet and/or the fixing zone 7. For example, a size of a section of the wall material that lies in the plane of the bottom of the body and extends from the wall towards the centre can be 5 to 40 mm , whereas the fixing zone need only be between 1 and 15mm. The method furthermore comprises obtaining a sheet of electrically conductive material comprising a coating on a first surface and attaching the coated sheet of electrically conductive material to the edge of the body by forming a fixing zone, e.g. weld, between the coating of the sheet of electrically conductive material and the polymer material of the body thereby closing the opening.

Attaching the coated sheet 5, 6 of electrically conductive material to the edge 3 of the body 2 may be performed such that the fixing zone 7 has a width w of between 1 mm and 15 mm. The fixing zone 7 may define an overlap between the sheet 5 and the body 2. By keeping the fixing zone 7 small, e.g. between 1 mm and 15 mm, the volume of polymer material that has to melt during attachment, e.g. lamination of the body 2 to the coating 6 of the sheet 5 is kept small and consequently, the internal thermal stress that is generated in the final product, i.e. in the heating recipient 1 is also kept minimal. Furthermore, by keeping the fixing zone small and by keeping the overlap between the sheet 5 and the body 2 small, e.g. between 1 mm and 15 mm, thermal stresses during use may also be kept minimal. Thus the risk of deformation of the heating recipient upon heating during use of the heating recipient may be reduced, kept minimal or may even be avoided.

Hereinafter, by way of illustration an exemplary method according to an embodiment of the present invention will be described by means of a sequence of standard and optional steps. It has to be understood that this is only by way of example and that this sequence, nor the materials used are intended to limit the invention in any way. The present invention also applies to other sequences and to the use of other materials, e.g. materials as described above, suitable to fulfil the same function as the materials described hereinafter.

In a first step, a sheet 5 comprising or consisting of electrically conductive material, which may, for example be a steel sheet or any other electrically conductive material as described in the first aspect, is provided. The steel sheet 5 may have a thickness of between 0.05 mm and 0.5 mm , such as for example 0.21 mm. The sheet 5 advantageously has a thickness sufficient to obtain a good induction heating of the content of the heating recipient 1 while still having sufficient stiffness to withstand thermal stress so as to avoid deformation of the sheet 5, and consequently of the complete heating recipient 1, upon heating.

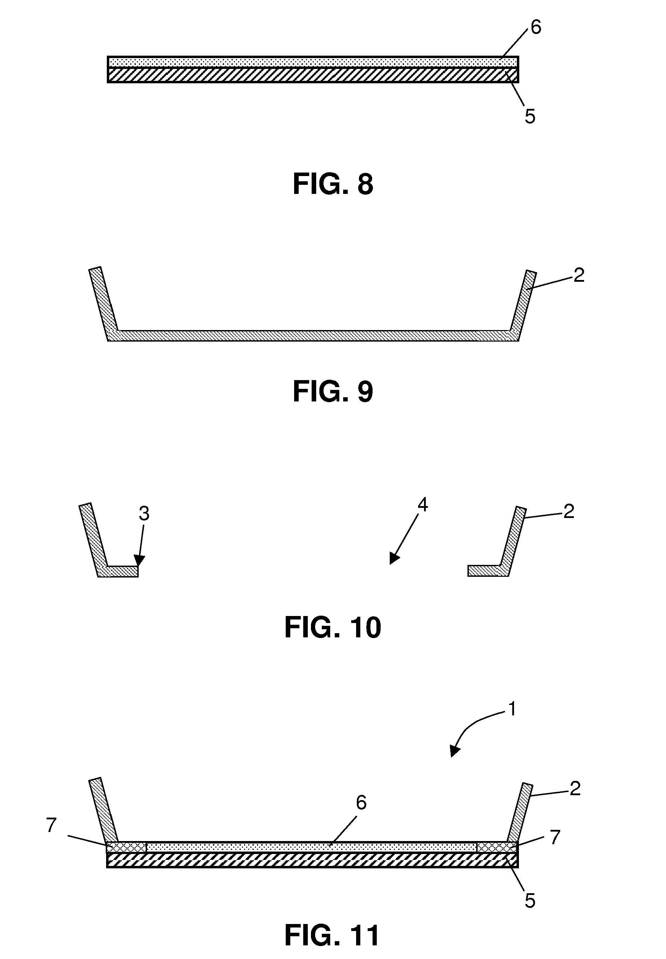

The surface of the sheet 5 onto which the body 2 will have to be attached, may then be provided with a coating 6 (see Fig. 8). The coating 6 may comprise a polymer material suitable for being attached, e.g. for being laminated to or to form a weld with the polymer material of the body 2. The coating 6 may, for example, comprise PP or PET. Advantageously, the polymer material of the coating 6 may be the same as the polymer material of the body 2. The coating 6 may have a thickness of between 0.01 mm and 0.1 mm, and may for example be 0.04 mm. Providing a coating 6 may be performed by any suitable technique known by a person skilled in the art, for example by laminating.

In a next step, a body 2, also referred to as container, is obtained. This body 2 may, for example, be a conventional body, e.g. plate or cup, made of a polymer material such as PP or PET (see Fig. 9) wherein an opening is made or it may be a body 2 wherein the opening is already present, e.g. by manufacturing the body 2 in such a way or obtaining a body that is manufactured in such a way. In one example, obtaining a body 2 may comprise obtaining a conventional body made of a polymer material and providing an opening in a wall of the body 2, in the example given in Fig. 10 in a bottom wall of the body 2. This may be performed such that the opening 4 is located centrally in the bottom wall. The opening may be provided by cutting or punching. The body 2, i.e. the conventional body or the body with the opening already being present, may be formed by thermoforming, or by any other production method suitable to be used with thermoplastic polymers. It may be moulded.

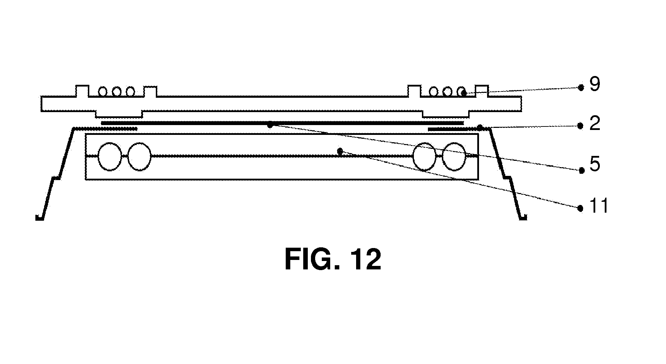

In a next step, the coated sheet 5, 6 is attached to edge 3 of the body 2, resulting in a heating recipient 1 according to embodiments of the invention (see Fig. 11). This may be done by welding. An example of a suitable arrangement for performing the welding process is illustrated in Fig. 12. According to embodiments of the invention, welding may be performed by induction heating of the coating 6. It is an advantage of embodiments according to the present invention that use can be made of induction heating, i.e. the technique that will be used for heating with the heating recipient. Therefore, an induction coil 9 may be used, for example located at a lower surface of the sheet, i.e. at a surface opposite to the upper surface at which the coating 6 is provided. In Fig. 12 only the sheet 5 is shown and not the coating 6. It has to be noted this is only for the ease of explanation, and that in practice both the coating 6 and the sheet 5 are present when the induction coil 9 is provided. Hence, the sheet is heated to a temperature above the melting temperature of the coating material. Thereby, the coating 6 as well as part of the body material is melted by induction heating and in that way attached to the edge 3 of the body 2, thereby forming a fixing zone 7, e.g. weld 7.

According to embodiments of the invention, a cooling mechanism 11 may also be provided in the setup for manufacturing (see Fig. 12). The cooling mechanism 11 is provided for example at an inner side of the heating recipient 1 to be formed, i.e. at on opposite side of the coated sheet 5, 6 than where the induction coil 9 is provided. The latter allows fast cooling of the material upon formation of the fixing zone 7. During the melting of the coating, the cooling mechanism 11 prevents the material of the body 2 from melting over its full thickness. As soon as the heating by induction stops, the cooling mechanism 11 provides fast freezing of the material of the body 2, thereby minimising cycle time.

An advantage of using welding for attaching the coated steel sheet 5, 6 to the body 2 is that it is an energy-economical way and that short processing times can be used, resulting in an efficient manufacturing method and a low, or reduced, financial and energy cost. However, according to other embodiments of the invention, the coated sheet 5, 6 may also be attached to the body 2 by using other methods such as e.g. ultrasonic techniques, welding by laser, by using a heated stamp, soldering, gluing or any other suitable technique known by a person skilled in the art.

It is to be understood that although preferred embodiments, specific constructions and configurations, as well as materials, have been discussed herein for devices according to the present invention, various changes or modifications in form and detail may be made without departing from the scope of this invention as defined by the appended claims.

## Claims

1. A heating recipient (1) comprising:
- a body (2) having an edge (3) defining an opening (4) in a wall of the body (2), the body (2) being formed of a polymer material, and
- a sheet (5) of electrically conductive material having a first coating (6) on an upper surface,
wherein the coated sheet (5, 6) of electrically conductive material is attached to the edge (3) of the body (2) by means of a fixing zone (7) between the first coating (6) and the polymer material of the body (2), thereby closing the opening (4), and wherein the edge (3) is formed from a section of the body extending inwards from all around a lower part of the body towards the centre of the body, thereby forming an attachment section for attaching to the coated sheet.

2. A heating recipient (1) according to claim 1, wherein the fixing zone (7) is a weld and/or the fixing zone (7) has a width (w) of between 1 mm and 15 mm.

3. A heating recipient (1) according to claim 1 or 2, the heating recipient (1) furthermore comprising a second coating (8) at a surface opposite to the surface of the sheet (5) where the first coating is present.

4. A heating recipient (1) according to any of the previous claims, wherein the first coating (6) on the sheet (5) comprises a same material as the body (2).

5. A heating recipient (1) according to any of the previous claims, wherein the sheet comprises ferromagnetic material.

6. A heating recipient (1) according to any of the previous claims, wherein the polymer material of the body (2) comprises polypropylene or polyethylene terephthalate.

7. Use of the heating recipient according to any of the previous claims for heating food.

8. Use of the heating recipient according to any of claims 1 to 6 for heating a liquid.

9. Method for manufacturing a heating recipient (1), the method comprising:
- obtaining a sheet (5) of electrically conductive material comprising a first coating (6) on a first surface,
- obtaining a body (2) formed of a polymer material, the body (2) comprising an edge (3) defining an opening (4) in a wall of the body (2), the edge (3) being formed from a section of the body extending inwards from all around a lower part of the body towards the centre of the body, thereby forming an attachment section for attaching to the sheet (5); and
- attaching the coated sheet (5, 6) to the edge (3) of the body (2) by forming a fixing zone (7) between the first coating of the sheet (5) and the polymer material of the body (2) thereby closing the opening (4).

10. A method according to claim 9, wherein attaching the coated sheet (5, 6) to the edge (3) of the body (2) is performed such that the fixing zone (7) has a width (w) of between 1 mm and 15 mm.

11. A method according to claim 9 or 10, wherein forming a fixing zone comprises creating a weld.

12. A method according to any of the claims 9 to 11, wherein attaching the coated sheet (5, 6) to the edge (3) of the body (2) is performed by welding.

13. A method according to any of claims 9 to 12, wherein forming a fixing zone is performed by induction heating of the sheet (5) of electrically conductive material.

14. A method according to any of claims 9 to 13, wherein obtaining a sheet (5) comprising a coating (6) on an upper surface is performed by lamination.

15. A method according to any of claims 9 to 14, wherein obtaining a body comprises providing a body and cutting or punching an opening in a wall of the body along an edge (3).
